# EUROPEAN PATENT APPLICATION

(11) **EP 4 123 597 A1**
(43) Date of publication of application: **25.01.2023**
(21) Application number: 21186443.4
(22) Date of filing: 19.07.2021
(51) Int. Cl.: G06V 20/52, G06V 10/82

(54) **CONTROL SYSTEM FOR A MEASURING SYSTEM**

(71) Applicant: Summa IP B.V., 6343 AH Klimmen (NL)
(72) Inventor: Didden, Chento, 6343 AH Klimmen (NL)
(74) Representative: Renkema, Jaap

(57) **Abstract**

The invention relates to control system for enhancing a locally measured parameter retrieved from a local measuring system, the local measuring system comprising at least one local measuring device functionally coupled to said control unit, and the control unit comprising:
- a communication device;
- a data processor functionally coupled to said communication device and comprising a computer program product which, when running on said data processor:
* retrieve at least one locally measured parameter from said at least one local measuring device;
* functionally couples to a trained machine learning network, for exchanging data with said trained machine learning network;
* provide said at least one locally measured parameter as input to said trained machine learning network using said communication device;
* generate said enhanced locally measured parameter using said trained machine learning network.

## Description

### FIELD OF THE INVENTION

The present invention relates to a control system for a measuring system, a computer program product for generating control settings for a measuring system, a measuring system, and a method for operating a measuring system.

### BACKGROUND OF THE INVENTION

Many measuring systems use expansive measuring devices that need calibration, or that are operated in stable or laboratory conditions. Other measurement systems are relatively cheap to use, but have low accuracy, high margins of error, or are just not sensitive.

With more and more processor power, there is an ever increasing need for measurement data.

### SUMMARY OF THE INVENTION

It is an objective of the present invention to provide a measuring system comprising a measuring device, for instance the measuring device comprises a sensor.

Yet another or alternative object is to create a platform that is capable of providing accurate measurements at an affordable price.

Aspects of the present invention are set out in the accompanying independent and dependent claims. Features from the dependent claims may be combined with features from the independent claim as appropriate and not merely as explicitly set out in the claims.

At least the above-mentioned objective is achieved by a control system for enhancing a locally measured parameter retrieved from a local measuring system, the local measuring system comprising at least one local measuring device functionally coupled to said control system, and the control system comprising:
- a communication device;
- a data processor functionally coupled to said communication device and comprising a computer program product which, when running on said data processor:
   * retrieve at least one locally measured parameter from said at least one local measuring device;
   * functionally couples to a trained machine learning network, in particular a deep learning network, for exchanging data with said trained machine learning network, wherein said machine learning network is trained using a training dataset obtained by:
      + providing a series of variations of physical sample situations that are varied in a predetermined sample situation space;
      + providing a series of corresponding reference measured parameters by providing at least one corresponding reference measured parameter with each variation which is measured using at least one reference measuring device which is statistically representative of the at least one local measuring device;
      + providing a series of corresponding second reference measured parameters by providing at least one corresponding second reference measured parameter with each variation which is measured using at least one second measuring device, and
      + generating said training dataset from said series of corresponding reference measured parameters and said series of corresponding second reference measured parameters;
   * provide said at least one locally measured parameter as input to said trained machine learning network using said communication device;
   * generate said enhanced locally measured parameter using said trained machine learning network.

Machine learning techniques (mainly deep learning) are to design and train a model given an input of the same type (RGB image, infrared, etc.) as the system perceives. The model is trained on a large amount of annotated data, a training dataset. In the current case, measured data in which an event has been measures using at least two types of sensors. In the case of deep learning, a detection framework such as Faster-RCNN, SSD, R-FCN, Mask-RCNN, or one of their derivatives can be used. A base model structure can be VGG, AlexNet, ResNet, GoogLeNet, adapted from the previous, or a new one. A model can be initialized with weights and trained similar tasks to improve and speedup the training. Optimizing the weights of a model, in case of deep learning, can be done with the help of deep learning frameworks such as Tensorflow, Caffe, or MXNET. To train a model, optimization methods such as Adam or RMSProb can be used. Classification loss functions such Hinge Loss or Softmax Loss can be used. Other approaches which utilize handcrafted features (such as LBP, SIFT, or HOG) and conventional classification methods (such as SVM or Random Forest) can be used.

On the basis of a set of training data with measurements, one or more machine learning algorithms and statistical classification algorithms can be applied. Example algorithms may include linear classifiers (e.g. Fisher's linear discriminant, logistic regression, naive Bayes, and perceptron), support vector machines (e.g. least squares support vector machines), clustering algorithms (e.g. k-means clustering), quadratic classifiers, multi-class classifiers, kernel estimation (e.g. k-nearest neighbor), boosting, decision trees (e.g. random forests), neural networks, Gene Expression Programming, Bayesian networks, hidden Markov models, binary classifiers, and learning vector quantization. Other example classification algorithms are also possible.

The process of categorization may involve the computing device determining, based on the output of the comparison of the one or more subsets with the one or more predetermined sets of scene types, a probability distribution (e.g. a Gaussian distribution) associated with the one or more subsets. Those skilled in the art will be aware that such a probability distribution may take the form of a discrete probability distribution, continuous probability distribution, and/or mixed continuous-discrete distributions. Other types of probability distributions are possible as well.

In an embodiment, measuring parameters of various sensors are coupled using a neural network. Using this coupling, the performance of at least one of the sensors is enhanced. In fact, the trained neural network is used to enhance any sensor of this same type. To accomplish this task, we exploit artificial intelligence methodologies ranging from standard machine learning models to deep neural networks. First we evaluated a solution that consists of different models that compose an ensemble machine learning model including a heuristic artificial intelligence (AI) approach and a Recurrent Neural Network (RNN). We aim to track the general behavior of the sensors by using an heuristic AI approach. Our heuristic AI approach learns the average outputs of the sensors in the dataset for the measurements to be enhanced to understand the generic behavior. We use RNNs which is a type of Artificial Neural Networks (ANN) which are proven to be successful on temporal datasets as we have for this task. Specifically, we build an RNN model to predict the specific future behavior of each sensor in addition to their general behavior for different prediction tasks. After our initial explorations with RNN models, we switched to Long Short-Term Memory (LSTM) networks, which solves the problem of vanishing/exploding gradients caused by the long temporal sequences.

In an embodiment, the RNN-based model are as follows: We build the network with 2 consecutive LSTM layers with 50 units and a Rectified Linear unit (ReLU) activation function for each and a dense output layer. We also explored to extend our proposed model to a deeper network when we accumulate more data To summarize, while the heuristic AI model predicts the general behavior of these sensors, the RNN-based model takes the responsibility of forecasting the specific behavior of each sensor. The current results show that our ensemble model forecasts future sensor patterns with a low error rate. The forecasted sensor measurement values will be used to enhance sensor output. In an embodiment, a feedback loop continuously read the sensor output, feeds that to the trained neural network, and returns enhanced sensor output.

Thus, a current computer program product and/or method will use machine learning techniques (mainly deep learning) to design and train a model using a training dataset. The model is trained on a large amount of measured data.

In an embodiment, the measurement system comprises the neural network in a trained condition. To this end, the neural network is trained using a training dataset. Alternatively, the neural network is trains and/or re-trained during use. In an embodiment, the training dataset is composed and/or updated in the following way.

First, there is provided a series of variations of physical sample situations that are varied in a predetermined sample situation space. This can for instance be done by bringing the measuring devices in a working situation were over time they will encounter, or be exposed to, most of the existing working conditions.

"Predetermined" when used in "predetermined sample situation space" in the current context relates to the expected use of the local measuring device. Thus, in an embodiment, when setting up a reference measuring device and second measuring device, first it is determined what it is the local measuring device is supposed to measure. For instance, if a spatial heat imaging device is the local measuring device, the following is done. It is determined what will need to be measured. For instance people approaching and going away from the local measuring device. Or peoples passing the measuring deice from left to right and from right to left.

Next, there is provided a series of corresponding reference measured parameters by providing at least one corresponding reference measured parameter with each variation which is measured using at least one reference measuring device which is statistically representative of the at least one local measuring device. This can for instance be done by randomly selecting measuring devices that are from the same of identical production process as the measuring device that is labeled "local" measuring device. For instance, suppose a sensor is produced in a batch production in batches of 100, then randomly for instance three devices are selected and made into reference measuring devices. The other measuring devices are all used as local measuring devices.

Next, there is provided a series of corresponding second reference measured parameters by providing at least one corresponding second reference measured parameter with each variation which is measured using at least one second measuring device. This means in an explementary embodiment, a second measuring device is selected end exposed to the same or corresponding circumstances as the reference measuring device.

Next, the measured parameters are used to generate the training dataset from said series of corresponding reference measured parameters and said series of corresponding second reference measured parameters.

The reference operating parameters may include previously measured data for each of the reference measuring device and/or a reference drive unit. Said measured data may be provided as a specification from the manufacturers of at least one of the sensors. These sensors measure physical quantities as measured data. The measured data may include spatial information, temperature, time, voltage, current, magnetic field, length, electrical power, luminescence, radiation level, spectrum of electromagnetic radiation, polarization, mass, pressure, flux, frequency, force, and combinations thereof.

In an embodiment, the machine learning network comprises a first categorization machine learning network for providing a selected category selected from a set of categories in response to said second measured parameter, said training dataset comprises said category coupled with said first measured parameter, and wherein said enhanced locally measured parameter comprises a category selected from said set of categories. Providing additional categorizing can reduce data. Furthermore, it can give meaning to measured data, increasing accuracy.

In an embodiment, the first and second measured parameter comprises spatial data of a physical parameter, and wherein said locally measured parameter comprises spatial data of a physical parameter, in particular said first and second measured parameter are selected from spatial data in a visual spectrum, spatial data in an infrared spectrum, and a combination thereof, more in particular said first and second measurement parameter and said locally measured parameter are selected from spatial data in a visual spectrum, spatial data in an infrared spectrum, and a combination thereof.

In an embodiment, the set of categories is selected from a presence of a human being, a presence of an animal, a relative location of a human being with respect to said measuring device, a relative location of an animal with respect to said measuring device, and a combination thereof.

In an embodiment, the local measuring device is one produced in a production batch of measuring devices, wherein said reference measuring device comprises at least one measuring device randomly selected from said production batch.

In an embodiment, the local measuring device is one produced in a production in a serial production process of measuring devices, wherein said reference measuring device comprises at least one measuring device randomly selected from said production batch, in particular randomly selected within preset time intervals.

In an embodiment, the local measuring device is a sensor for measuring at least one physical parameter, in particular a quantity of the at least one physical parameter, in particular said physical parameter is selected from spatial information, temperature, time, voltage, current, magnetic field, length, electrical power, luminescence, radiation level, spectrum of electromagnetic radiation, polarization, mass, pressure, flux, frequency, force, and combinations thereof.

In an embodiment, the at least one local measuring device is an infrared imaging device having a local spatial resolution, said first measuring device is an infrared imaging device having a first spatial resolution, in particular said local spatial resolution being equal to said first spatial resolution, and said second measuring device comprises an infrared imaging having a second spatial imaging resolution which is higher than said local spatial resolution, or
said at least one local measuring device is an infrared imaging device having a local spatial resolution, and said second measuring device comprises an infrared imaging device having a second spatial imaging resolution which is higher than said local spatial resolution.

In an embodiment, the computer program product further communicates said enhanced locally measured parameters to said measuring system using the communication device

In an embodiment, the control system further comprises a second communication device for communicating data to the measuring system, in particular the communication device using a second communication protocol different from the communication protocol of the communication device, wherein the computer program product, when running on said data processor, controls the second communication device for transmitting the local control settings to said measuring system.

In an embodiment, the computer program product transmits said data to said local measuring system at least once a day, in particular functionally real time, in particular real time.

In an embodiment, the computer program product is set to update said training dataset from said series of corresponding reference measured parameters and said series of corresponding second reference measured parameters on at least a daily base, in particular at least once every hour.

There is furthermore provided a measuring system comprising the control system and at least one local measuring device functionally coupled to said control system.

There is further provided a referencing system for the measurement system comprising a controlled measurement system comprising:
- a referencing system communication device;
- a referencing system data processor functionally coupled to said referencing communication device and a referencing computer program product which, when running on said referencing data processor:
   + providing a series of variations of physical sample situations that are varied in a predetermined sample situation space;
   + providing a series of corresponding reference measured parameters by providing at least one corresponding reference measured parameter with each variation which is measured using at least one reference measuring device which is statistically representative of the at least one local measuring device;
   + providing a series of corresponding second reference measured parameters by providing at least one corresponding second reference measured parameter with each variation which is measured using at least one second measuring device, and
   + generating said training dataset from said series of corresponding reference measured parameters and said series of corresponding second reference measured parameters;
      * provide said reference measured parameters and second reference measured parameter as input to train said trained machine learning network.

There is furthermore provide a computer program product for the control system described above, which computer program product, when running on a data processor:
* retrieve at least one local measured parameter from said at least one local measuring device;
* functionally couples to a trained machine learning network, in particular a deep learning network, for exchanging data with said trained machine learning network, wherein said machine learning network is trained using a training dataset obtained by:
   + providing a series of variations of physical sample situations that are varied in a predetermined sample situation space;
   + providing a series of corresponding reference measured parameters by providing at least one corresponding reference measured parameter with each variation which is measured using at least one reference measuring device which is statistically representative of the at least one local measuring device;
   + providing a series of corresponding second reference measured parameters by providing at least one corresponding second reference measured parameter with each variation which is measured using at least one second measuring device, and
   + generating said training dataset from said series of corresponding reference measured parameters and said series of corresponding second reference measured parameters;
* provide said at least one locally measured parameter as input to said trained machine learning network using said communication device;
* generate enhanced locally measured parameters using said trained machine learning network.

There is further provided a method for operating a measurement system provided with the control system described above, the method comprising:
* retrieving at least one locally measured parameter from said at least one local measuring device;
* exchanging data with said trained machine learning network, wherein said machine learning network is trained using a training dataset obtained by:
   + providing a series of variations of physical sample situations that are varied in a predetermined sample situation space;
   + providing a series of corresponding reference measured parameters by providing at least one corresponding reference measured parameter with each variation which is measured using at least one reference measuring device which is statistically representative of the at least one local measuring device;
   + providing a series of corresponding second reference measured parameters by providing at least one corresponding second reference measured parameter with each variation which is measured using at least one second measuring device, and
   + generating said training dataset from said series of corresponding reference measured parameters and said series of corresponding second reference measured parameters;
* provide said at least one local measured parameter as input to said trained machine learning network using said communication device;
* generate said enhanced locally measured parameters using said trained machine learning network.

In an embodiment, the control unit further comprises a second communication device for communicating data to the measurin□g system, in particular the communication device using a second communication protocol different from the communication protocol of the communication device, wherein the computer program product, when running on said data processor, controls the second communication device for transmitting the local control settings to said measuring system. In an embodiment, the control unit communicates to the measuring sensor using a different communication protocol, including a different frequency, when communication to the measuring device than when communicating to the trained neural network.

In an embodiment, the computer program product transmits data to the measuring system at least once a day, in particular functionally real time, in particular real time. It allows continuous adjustment of the drive unit for attaining an enhanced measuring device output.

In an embodiment, the computer program product is set to receiving reference operating parameters at least a daily base, in particular at least once every hour. In this way, the training dataset can be updated, the artificial neural network can be re-trained. Usually, the reference measuring devices already have an operations time that is longer than the local light sources. Thus, in fact, the training dataset already is in time advance of ahead of the local measuring devices.

It can be understood that the embodiments of the method according to the invention may include a measuring system having any of the features or combinations of features that are disclosed herein in connection with discussions of the measuring system according to the invention. Accordingly, the entireties of the earlier discussions of the measuring system are hereby incorporated into this discussion of the examples of the method.

The invention further applies to an apparatus or device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

### BRIEF DESCRIPTION OF THE DRAWINGS

Further features and advantages of the invention will become apparent from the description of exemplary and non-limiting embodiments of a measurement system.

On the attached drawing sheets:
figure 1 illustrates a schematic block diagram of a measurement system in accordance with an embodiment of the invention;
In figures 2, 3, 4, and 5, some variations in processing of measurement parameters is illustrated, and
In figure 6, and example of creating variations physical sample situations of a measurement parameter is illustrated.

### DETAILED DESCRIPTION OF EMBODIMENTS

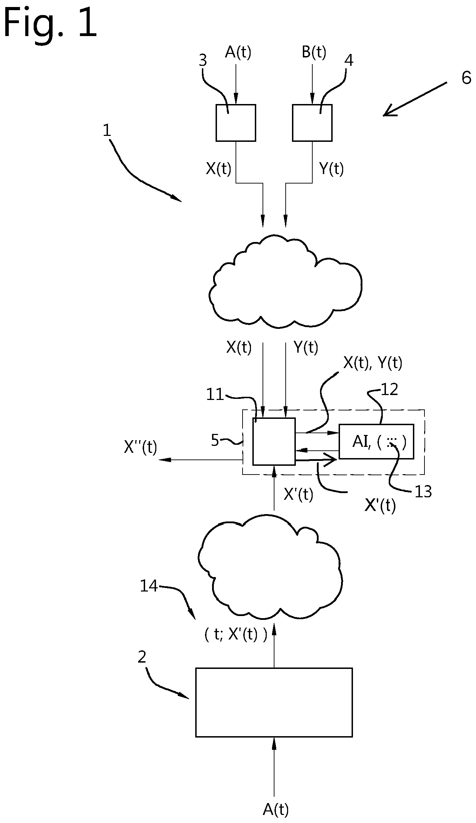

Figure 1 is a diagram illustrating an exemplary measuring system 1. The current measuring system 1 comprises a local measuring system 14 comprising a local measuring device 2. The local measuring device 2 is exposed to a physical sample situation A(t). Often, such a situation changes in time, hence the (t).

In response, the local measuring system outputs a locally measured parameter X'(t). For instance, light intensity changes, and the locally measured parameter luminescence is output. This is transmitted to a control system 5. This transmission can be wired, or wireless. The control system 5 receives the locally measured parameter X'(t). The control system 5 enhances the locally measured parameter X'(t) and outputs an enhanced locally measured parameter X"(t). In a basic form, it may be an enhanced luminescence value or time series of luminescence values. Alternatively, the control system 5 provides a classification. For instance, suppose the local measuring device 2 is a CCD camera. Then the enhanced locally measured parameter may be an enhances image, for instance brighter, sharper, or the like. Alternatively, the enhanced locally measured parameter may be a classification indicating what is in the image. For instance a human being, a cat, or such. The classification may even be "a person walking from A to B", or "two persons walking from B to C".

The control system 5 comprises a communication device 11. Furthermore, the control system comprises a neural network that is trained of being trained or re-trained. The nature of a possible neural network is explained earlier. A neural network as such can be defined in a memory defining network parameters like nodes, layers, connections, transfer functions, transfer function parameters, and the like, and software or hardware or a combination thereof defining the processing.

The relatively abstract entity "neural network" is indicated with reference number 12. A neural network becomes a functional entity when it is trained (or sometimes even when it is being trained or re-trained). That is done using a training dataset, in abstractum indicated with reference number 13.

At the other end of the measuring system 1, there is a referencing system 6. The referencing system 6 comprises a reference measuring device 3 and a second reference measuring device 4. The referencing system 6 provides a reference measured parameter X(t) and a second reference measured parameter Y(t) to the control system 5. The control system receives these measured parameters X(t) and Y(t) and provides these in a training dataset 13 to the neural network 12.

In operation, the neural network may be fully trained (or can even be re-trained during use). The local measuring system 14 send a locally measured parameter X'(t) to the control system 5. There the control system 5 provides the locally measured parameter X'(t) to the neural network 12 which generates the enhanced locally measured parameter X"(t).

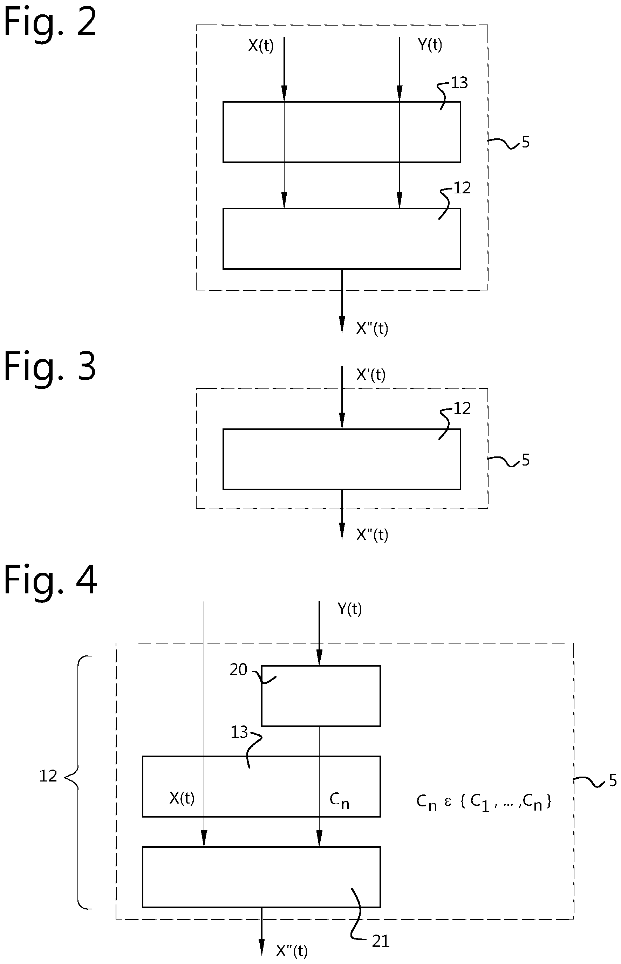

There are many alternative lay-outs and improvements that can be made to the measuring system illustrated so far. For instance, measured parameters from the measuring devices of the referencing system may be subjected to an additional pre-processing trained neural network. In figures 2-5, some alternative lay-outs of the control system 5 are illustrated.

In figure 2, a relatively straight-forward control system 5 is illustrated. The parameters X(t) and Y(t) are formed into a training dataset 13. The parameters may be processed, scaled, correlated, but result in a training dataset 13 that may be constantly supplemented or refreshed, or updated. The training dataset 13 is used to train (or re-train or update-train) the neural network 12 to output an enhanced measured parameter X"(t).

In figure 3, it is illustrated how a locally measured parameter X'(t) is introduced into the trained neural network 12, which then outputs an enhanced measured parameter X"(t). That can for instance be done (almost or functionally) real time. For instance, a constant (time) feed of parameters in input, and a constant (time) feed of enhanced parameters X"(t) is output.

In figure 4, a slightly more complex control system is illustrated. Here, the second reference parameter Y(t) is preprocessed. In the example, the second reference parameter Y(t) is fed to a pre-processing trained neural network 20. In the example, the pre-processing trained neural network 20 delivers a category Cn selected from a set {C1, ..., Cn} of categories. A training dataset 13 is constructed from the reference measured parameter X(t) and corresponding categories Cn from second reference measured parameters Y(t).

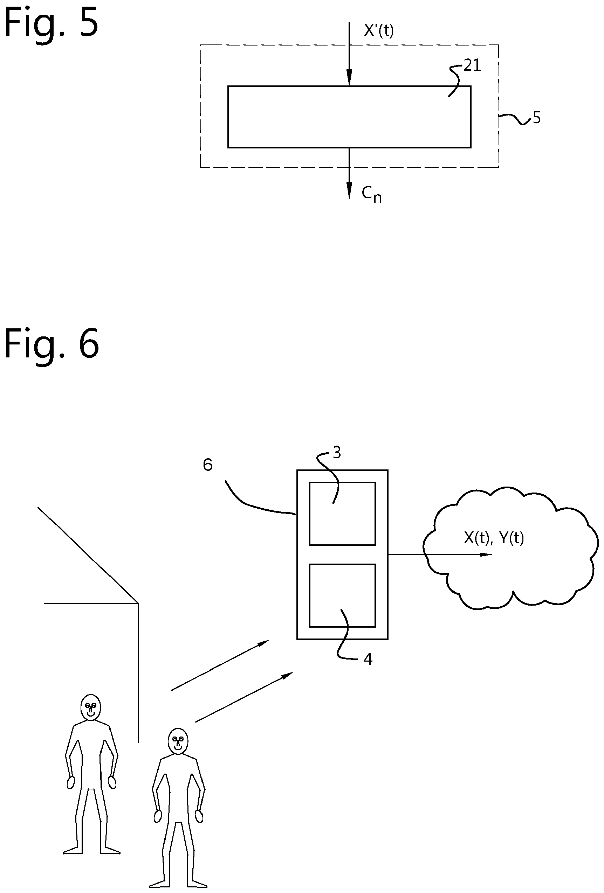

In figure 5, it is illustrated how a locally measured parameter X'(t) is introduced into the control system 5. The control system comprises a trained post-processing neural network 21 that outputs a category Cn that is subsequently output by the control system 5.

In figure 6, an example of subjecting the referencing system 6 is illustrated. In this example, the reference measuring device 3 and the second reference measuring device 4 are provided close together. They are exposed to a situation where a series of variations of physical sample situations occur that correspond to a predetermined sample situation space. Here, for instance two cameras are place in a space where people pass the cameras. This results in many different images of different people and numbers of people pass the cameras in different ways.

Elements illustrated here are functionally coupled. The coupling can be hard wired. In most embodiments, however, the elements communicate wireless. Thus, the functional coupling in such an embodiment is a wireless coupling. A skilled person will recognize that such a coupling can be via one or more means and protocols like WiFi, Bluetooth, Zigby, via optical coupling, and the like. The elements may all be coupled to the internet and communicate via internet protocols.

In the embodiment illustrated, parts are depicted as separate elements. In many embodiments, these elements will be physically separated from one another. These elements in many embodiments are going to be remote from one another. They may be located at stores, houses, manufacturing plants, and/or office buildings all over the world.

In the depicted embodiment, the control system 5 receives measured parameters from many measuring devices.

There are currently several illustrating examples of measuring devices that may be used in the current invention.

### Example 1: Panasonic AMG8533 infrared array sensor

In the following example, an implementation of the current invention is illustrated. In this embodiment, the performance of a relatively simple and affordable infrared array sensor is improved.

From a production batch of Panasonic AMG8533 sensors, a set of three sample infrared sensors are selected. These infrared sensors are placed in a temperature-controlled test facility. In the same test facility, next to each infrared sensor, a 4K camera is placed. In an alternative setup, one 4K (4K referring to a sample resolution) camera is displaceable from one infrared sensor to the next. Both the 4K camera and the infrared sensor are operated in their normal working ranges. Thus, a measuring setup is created. The infrared sensor and the 4K camera are both operationally coupled to an automated date acquisition system.

In an automated manner, samples from a sample space are presented to the measuring setup. In this example, an image and its corresponding heat signature are projected onto the infrared sensors and onto the 4K Camera. Each sample and the corresponding responses can be collected in a trainings dataset.

The samples can be provided in a continuously changing film stream, for instance, thus providing a time stream of samples and resulting measurements/responses.

Alternatively, both the infrared sensor and the 4K camera are mounted at a location, directed to the same area, and record people passing the setup. This provides an almost continuous stream of sample images and thus measurements. In an embodiment, the camera images from the 4K visual camera can first be processed by a trained neural network, for instance of a known type, that analyses the visual images on presence and position of people, and possible even the nature of the people in the image(s). This process is also referred to as categorizing. The provided categories are coupled with the infrared spatial images. This provides the reference measured parameters making or updating the training dataset.

In another experimental setup, in addition the response of each controller is measured and added to the training dataset.

### Example 2: NTC RS PRO Thermistor

From a production batch of RS PRO Thermistors 10Ω, 15 (Dia.) x 6mm, three examples were randomly selected.

Furthermore, a Nysemba-produced lux sensor can be used:
https://www.alibaba.com/product-detail/light-lux-sensor-for-lighting-sensor 60606786676.html?spm=a2700.7724857.normal offer.d image. 152425b9pCv19f

### Specifications

| Temperature Coefficient | Type | NTC |
|---|---|---|
| Thermal Time Constant | 103s | |
| Resistance @ 25 °C | 10Ω | |
| Tolerance ±20% | | |

### ApplicationProtection

| | | | |
|---|---|---|---|
| Depth | 6mm | | |
| Dimensions | | 15 (Dia.) x 6mm | |
| Minimum Operating Temperature | | | -40°C |
| Maximum Operating Temperature | | | +200°C |

And coupled therewith for obtain reference values to get measurement variation 70% smaller.

It is also possible to use an NTC manufactured by RS PRO as Thermistor 10Ω, 17 x 6mm:
https://nl.rs-online.eom/web/p/thermistor-ics/5167827/7cm mmc=NL-PLA-DS3A- - google- -CSS NL NL Passive Components Whoop- -(NL:Whoop!)+Thermistor+ICs- - 5167827&matchtype=&pla-300977292704&qclid=CiwKCAiwmv-DBhAMEiwA7xYrd43Zr9hLTJCTxsBrVI9SdQVz6k7soritrOPWHqvw-oxwoXuCTYog4BoCa8wQAvD BwE&gclsrc=aw.ds

These are coupled an result in only 0.1 degree variance for the thermistor.

In another example, a dust sensor by panasonic:
https://industrial.panasonic.com/ww/products/sensors/built-in-sensors/dust-sensor

Can be coupled to a calibrated dust sensor.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE LIST

- 1: measuring system
- 2: local measuring device
- 3: reference measuring device
- 4: second reference measuring device
- 5: control system
- 6: referencing system
- 11: control system communication device
- 12: Machine learning module
- 13: training data set
- 14: local measuring system
- 20: pre-processing trained neural network
- 21: trained post-processing

- t: time
- A(t): physical sample situation input
- B(t): physical sample situation input
- X(t): reference measured parameter
- Y(t): second reference measured parameter
- X'(t): locally measured parameter
- X"(t): enhanced locally measured parameter

## Claims

1. A control system for enhancing a locally measured parameter retrieved from a local measuring system, the local measuring system comprising at least one local measuring device functionally coupled to said control system, and the control system comprising:
- a communication device;
- a data processor functionally coupled to said communication device and comprising a computer program product which, when running on said data processor:
* retrieve at least one locally measured parameter from said at least one local measuring device;
* functionally couples to a trained machine learning network, in particular a deep learning network, for exchanging data with said trained machine learning network, wherein said machine learning network is trained using a training dataset obtained by:
+ providing a series of variations of physical sample situations that are varied in a predetermined sample situation space;
+ providing a series of corresponding reference measured parameters by providing at least one corresponding reference measured parameter with each variation which is measured using at least one reference measuring device which is statistically representative of the at least one local measuring device;
+ providing a series of corresponding second reference measured parameters by providing at least one corresponding second reference measured parameter with each variation which is measured using at least one second measuring device, and
+ generating said training dataset from said series of corresponding reference measured parameters and said series of corresponding second reference measured parameters;
* provide said at least one locally measured parameter as input to said trained machine learning network using said communication device;
* generate said enhanced locally measured parameter using said trained machine learning network.

2. The control system of claim 1, wherein said machine learning network comprises a first categorization machine learning network for providing a selected category selected from a set of categories in response to said second measured parameter, said training dataset comprises said category coupled with said first measured parameter, and wherein said enhanced locally measured parameter comprises a category selected from said set of categories.

3. The control system of claim 2, wherein said first and second measured parameter comprises spatial data of a physical parameter, and wherein said locally measured parameter comprises spatial data of a physical parameter, in particular said first and second measured parameter are selected from spatial data in a visual spectrum, spatial data in an infrared spectrum, and a combination thereof, more in particular said first and second measurement parameter and said locally measured parameter are selected from spatial data in a visual spectrum, spatial data in an infrared spectrum, and a combination thereof.

4. The control system of any one of the preceding claims when depending on claim 2, wherein said set of categories is selected from a presence of a human being, a presence of an animal, a relative location of a human being with respect to said measuring device, a relative location of an animal with respect to said measuring device, and a combination thereof.

5. The control system of any one of the preceding claims, wherein said local measuring device is one produced in a production batch of measuring devices, wherein said reference measuring device comprises at least one measuring device randomly selected from said production batch.

6. The control system of any one of the preceding claims, wherein said local measuring device is one produced in a production in a serial production process of measuring devices, wherein said reference measuring device comprises at least one measuring device randomly selected from said production batch, in particular randomly selected within preset time intervals.

7. The control system according to any one of the preceding claims, wherein said local measuring device is a sensor for measuring at least one physical parameter, in particular a quantity of the at least one physical parameter, in particular said physical parameter is selected from spatial information, temperature, time, voltage, current, magnetic field, length, electrical power, luminescence, radiation level, spectrum of electromagnetic radiation, polarization, mass, pressure, flux, frequency, force, and combinations thereof.

8. The control system according to any one of the preceding claims, wherein said at least one local measuring device is an infrared imaging device having a local spatial resolution, said first measuring device is an infrared imaging device having a first spatial resolution, in particular said local spatial resolution being equal to said first spatial resolution, and said second measuring device comprises an infrared imaging having a second spatial imaging resolution which is higher than said local spatial resolution, or said at least one local measuring device is an infrared imaging device having a local spatial resolution, and said second measuring device comprises an infrared imaging device having a second spatial imaging resolution which is higher than said local spatial resolution.

9. The control system according to any one of the preceding claims, wherein said computer program product further communicates said enhanced locally measured parameters to said measuring system using the communication device

10. The control system according to any one of the preceding claims, further comprising a second communication device for communicating data to the measuring system, in particular the communication device using a second communication protocol different from the communication protocol of the communication device, wherein the computer program product, when running on said data processor, controls the second communication device for transmitting the local control settings to said measuring system.

11. The control system according to any one of the preceding claims, wherein said computer program product transmits said data to said local measuring system at least once a day, in particular functionally real time, in particular real time.

12. The control system according to any one of the preceding claims, wherein said computer program product is set to update said training dataset from said series of corresponding reference measured parameters and said series of corresponding second reference measured parameters on at least a daily base, in particular at least once every hour.

13. A measuring system comprising the control system according to any one of the preceding claims and at least one local measuring device functionally coupled to said control system.

14. A referencing system for a measurement system of claim 13 comprising a controlled measurement system comprising:
- a referencing system communication device;
- a referencing system data processor functionally coupled to said referencing communication device and a referencing computer program product which, when running on said referencing data processor:
+ providing a series of variations of physical sample situations that are varied in a predetermined sample situation space;
+ providing a series of corresponding reference measured parameters by providing at least one corresponding reference measured parameter with each variation which is measured using at least one reference measuring device which is statistically representative of the at least one local measuring device;
+ providing a series of corresponding second reference measured parameters by providing at least one corresponding second reference measured parameter with each variation which is measured using at least one second measuring device, and
+ generating said training dataset from said series of corresponding reference measured parameters and said series of corresponding second reference measured parameters;
* provide said reference measured parameters and second reference measured parameter as input to train said trained machine learning network.

15. A computer program product for the control system according to any one of the preceding claims 1-12, which computer program product, when running on a data processor:
* retrieve at least one local measured parameter from said at least one local measuring device;
* functionally couples to a trained machine learning network, in particular a deep learning network, for exchanging data with said trained machine learning network, wherein said machine learning network is trained using a training dataset obtained by:
+ providing a series of variations of physical sample situations that are varied in a predetermined sample situation space;
+ providing a series of corresponding reference measured parameters by providing at least one corresponding reference measured parameter with each variation which is measured using at least one reference measuring device which is statistically representative of the at least one local measuring device;
+ providing a series of corresponding second reference measured parameters by providing at least one corresponding second reference measured parameter with each variation which is measured using at least one second measuring device, and
+ generating said training dataset from said series of corresponding reference measured parameters and said series of corresponding second reference measured parameters;
* provide said at least one locally measured parameter as input to said trained machine learning network using said communication device;
* generate enhanced locally measured parameters using said trained machine learning network.

16. A method for operating a measurement system provided with the control system of any one of the preceding claims 1-11, said method comprising:
* retrieving at least one locally measured parameter from said at least one local measuring device;
* exchanging data with said trained machine learning network, wherein said machine learning network is trained using a training dataset obtained by:
+ providing a series of variations of physical sample situations that are varied in a predetermined sample situation space;
+ providing a series of corresponding reference measured parameters by providing at least one corresponding reference measured parameter with each variation which is measured using at least one reference measuring device which is statistically representative of the at least one local measuring device;
+ providing a series of corresponding second reference measured parameters by providing at least one corresponding second reference measured parameter with each variation which is measured using at least one second measuring device, and
+ generating said training dataset from said series of corresponding reference measured parameters and said series of corresponding second reference measured parameters;
* provide said at least one local measured parameter as input to said trained machine learning network using said communication device;
* generate said enhanced locally measured parameters using said trained machine learning network.
